# EUROPÄISCHE PATENTSCHRIFT

(11) **EP 0 916 044 B1**
(45) Veröffentlichungstag und Bekanntmachung des Hinweises auf die Patenterteilung: **02.04.2003**
(21) Anmeldenummer: 97921579.5
(22) Anmeldetag: 27.05.1997
(51) Int. Cl.: F16J 9/28

(54) **VERFAHREN ZUR HERSTELLUNG EINES DICHTELEMENTES SOWIE DICHTELEMENT HERGESTELLT NACH DEM VERFAHREN**
METHOD OF MANUFACTURING A SEALING ELEMENT, AND SEALING ELEMENT MANUFACTURED BY THAT METHOD
PROCEDE DE PRODUCTION D'UN ELEMENT D'ETANCHEITE, ET ELEMENT D'ETANCHEITE PRODUIT SELON CE PROCEDE

(30) Priorität: 30.07.1996 EP 96810508
(43) Veröffentlichungstag der Anmeldung: 19.05.1999
(73) Patentinhaber: Burckhardt Compression AG, 8404 Winterthur (CH)
(72) Erfinder: FEISTEL, Norbert, CH-8408 Winterthur (CH)
(74) Vertreter: Dr. Graf & Partner
(86) Internationale Anmeldenummer: CH9700215
(87) Internationale Veröffentlichungsnummer: WO98004853

(56) Entgegenhaltungen:
- DE-A- 2 235 694
- DE-A- 19 548 969
- US-A- 3 655 208
- US-A- 4 631 333
- US-A- 5 489 631

## Beschreibung

Die Erfindung betrifft ein Verfahren zur Herstellung eines aus zumindest einem Kunststoff bestehendenDichtelements für einen insbesondere trockenlaufenden Kolbenkompressor gemäss dem Oberbegiff von Anspruch 1. Die Erfindung betrifft weiter ein Dichtelement hergestelltnach dem erfindungsgemässen Verfahren.

Zum Abdichten einer Kolbenstange an einer insbesondere trockenlaufenden Kolbenmaschine sind auf der Basis von Fluor-Kunststoffen gefertigte Dichtelemente bekannt, wobei als Kunststoffmaterial insbesondere PTFE (Polytetrafluorethylen) Verwendung findet. Zur Herstellung eines derartigen Dichtelements wird ein gesintertes oder extrudiertes, plattenförmiges Kunststoff-Halbzeug verwendet, aus welchem das Dichtelement mittels spanender Fertigung herausgearbeitet wird. Das Kunststoff-Halbzeug weist herstellungsbedingt richtungsabhängig unterschiedliche physikalische, mechanische und tribologische Eigenschaften auf, was auch als eine Anisotropie bezeichnet wird. So weist zum Beispiel ein extrudiertes Kunststoff-Halbzeug bezüglich der Herstellungsrichtung und senkrecht zu dieser Richtung unterschiedliche physikalische, mechanische und tribologische Eigenschaften auf. Eine besonders ausgeprägte Anisotropie weist ein Kunststoff-Halbzeug auf, wenn zusätzlich Faserteile wie Kohlefasern, Glasfasern oder Aramit eingelagert sind. Ein aus einem Kunststoff-Halbzeug gefertigtes, z.B. bogenförmig verlaufendes Dichtelement weist somit in Umfangsrichtung eine Anisotropie, daher veränderliche physikalische, mechanische und tribologische Eigenschaften auf. Besonders ausgeprägt wird die Anisotropie bei faserhaltigen Kunststoffen, wobei geometrisch identisch ausgestaltete Dichtelemente in Umfangsrichtung unterschiedliche pysikalische, mechanische und tribologische Eigenschaften aufweisen können, je nachdem, wie die Dichtelemente bezüglich der Faserausrichtung aus dem Kunststoff-Halbzeug herausgearbeitet worden sind.

Das Gefüge bekannter Dichtelemente weist eine nicht kontrollierbare Anisotropie auf, was sich auf deren Verschleiss und Lebensdauer entsprechend negativ auswirkt.

In der DE-A-195 48 969 wird ein Öldichtungsring offenbart, der aus einem Kunstharz durch Einspritzgussformen hergestellt ist. In der US-A-5,489,631 wird eine Elastomer-Dichtung vorgeschlagen, die mittels eines Spritzgiessverfahrens hergestellt wird. Die US-A-4,631,333 offenbart die Herstellung verschiedener Polymere, die zum Spritzgiessen geeignet sind.

Es ist Aufgabe der vorliegenden Erfindung ein wirtschaftlich vorteilhafteres Dichtelement vorzuschlagen. Im speziellen soll durch die Erfindung ein Verfahren zur Herstellung eines Dichtelements für einen insbesondere trockenlaufenden Kolbenkompressor bereitgestellt werden, welches Dichtelement insbesondere in Umfangsrichtung homogene physikalische, mechanische und tribologische Eigenschaften aufweist.

Diese Aufgabe wird gelöst mit einem Verfahren gemäss den Merkmalen von Anspruch 1. Die Aufgabe wird weiter gelöst durch ein Dichtelement aufweisend die Merkmale gemäss Anspruch 11. Die Unteransprüche 2 bis 10 beziehen sich auf weitere, vorteilhafte Verfahrensführungen. Die Unteransprüche 12-13 beziehen sich auf weitere, vorteilhafte Ausgestaltungen des Dichtelements.

Die Aufgabe wird insbesondere dadurch gelöst, dass das aus zumindest einem Kunststoff bestehende Dichtelement durch ein Spritzgiessverfahren hergestellt wird, bei welchem der flüssige Kunststoff an mindestens einer Angussstelle in ein Werkzeug, insbesondere eine Giessform, eingebracht wird, wobei die räumliche Lage jeder Angussstelle so gewählt wird, dass das Dichtelement frei von Anspritzpunkten ist. Der Kunststoff für das Dichtelement umfasst vorzugsweise das Kunststoffmaterial PEEK (Polyetheretherketon) oder PFA (Perfluoralkoxy-Copolymer) oder PPS (Polyphenylen-Sulfid) oder weitere, im Spritzgiessverfahren verarbeitbare Kunststoffe. Beim Hochtemperaturpolymer PEEK handelt es sich um ein Material, das im Spritzgiessverfahren gut verarbeitbar ist. Zudem weist ein Dichtelement bestehend zumindest aus PEEK oder einem modifizierten PEEK sehr gute mechanische Eigenschaften auf, z.B. eine sehr gute Warmfestigkeit, was eine hohe Druckbelastung bei hohen Temperaturen erlaubt, und z.B. eine hohe Verschleissfestigkeit, so dass ein solches Dichtelement eine hohe Standzeit aufweist.

Die Herstellung eines Dichtelementes mittels des Kunststoffes PTFE ist äusserst aufwendig, denn PTFE wird über einen Sinterungsprozess erzeugt, indem ein Granulat durch Pressen verdichtet wird. Das Verdichten bewirkt eine relativ grosse Volumenänderung, weshalb in einem ersten Arbeitsgang ein Halbzeug erzeugt wird, üblicherweise ausgebildet als ein platten- oder stangenförmiger Körper. In mehreren nachfolgenden Arbeitsgängen wird aus dem Halbzeug durch Drehen, spanende Fertigung und weitere Bearbeitungsverfahren das Dichtelement herausgearbeitet, wobei insbesondere bei ringförmig ausgestalteten Dichtelementen der überwiegende Anteil des Halbzeuges als Abtragmaterial anfällt und entsorgt werden muss.

Ein Vorteil des erfindungsgemässen Verfahrens ist darin zu sehen, dass das Dichtelement in sehr wenigen Arbeitsgängen herstellbar ist, ohne die Notwendigkeit eines nachfolgenden aufwendigen Fertigungverfahrens. Das erfindungsgemässe Verfahren ermöglicht somit die Herstellung von sehr kostengünstigen Dichtelementen. Zudem fällt kaum oder kein Abfallmaterial an, so dass selbst bei der Verwendung von sehr teurem Kunststoffmaterial wie z.B. PEEK ein kostengünstiges Dichtelement herstellbar ist, insbesondere wenn das Dichtelement ringförmig ausgestaltet ist, was eine nur geringe Materialmenge erfordert. Im Unterschied zur spanenden Herausarbeitung eines Dichtelements aus einem platten- oder stangenförmigen Halbzeug kann nämlich beim Spritzgiessverfahren der Materialüberschuss zwischen Giessling und Endprodukt grösstenteils wiederverwendet werden, beispielsweise durch einfaches Einschmelzen, so dass kaum oder kein Abfall anfällt.

Ein weiterer Vorteil des erfindungsgemässen Verfahrens beziehungsweise des nach dem Verfahren hergestellten Dichtelements ist darin zu sehen, dass das Dichtelement durch das Spritzgiessverfahren in sehr einfacher Weise ohne besonders extensive Nachbearbeitungsschritte aus dem Giessling gewonnen werden kann. Ferner ermöglicht das Spritzgiessen die Herstellung eines Dichtelements mit in Umfangsrichtung gleichbleibenden physikalischen, mechanischen und tribologischen Eigenschaften, weil bei der Herstellung über die Strömungsrichtung des Kunststoffs die gewünschte Geometrie des fertigen Dichtelements deutlich besser berücksichtigt werden kann als beispielsweise bei der spanenden Herausarbeitung aus einem Halbzeug. Ein weiterer Vorteil des erfindungsgemässen Verfahrens ist darin zu sehen, dass die physikalischen, mechanischen und tribologischen Eigenschaften des Dichtelementes auch gezielt beeinflusst werden können, zum Beispiel in Abhängigkeit der Bauteilgeometrie, indem während dem Spritzen durch die Steuerung des Füllvorganges die physikalischen, mechanischen und tribologischen Eigenschaften in einem weiten Bereich beeinflussbar sind.

Bei teilkristallinen Kunststoffen wie beispielsweise PEEK sind die physikalischen und mechanischen Eigenschaften stark abhängig von der Anzahl, der Verteilung und dem Typ der erzeugten Kristalle. Bei dem im Spritzgiessverfahren hergestellten Dichtelement lässt sich die Ausbildung der Kristalle günstig beeinflussen, so dass gegenüber den bisher bekannten Herstellungsverfahren wie Extrusion oder Sintern ein Dichtelement mit einer um 30% bis 50% höhere mechanische Belastbarkeit, zum Beispiel bezüglich Zug, Druck oder Biegebeanspruchung erzeugbar ist. Ein im Spritzgiessverfahren aus PEEK hergestelltes Dichtelement weist eine Kristallinität auf, die höher ist als bei einem Sinter- oder Extrudierverfahren. Die Kristallinität von im Spritzgiessverfahren erzeugen Bauteilen aus PEEK ist beeinflussbar durch Parameter wie die Temperatur oder die Abkühlgeschwindigkeit. Gegenüber von im Extrudieroder Sinterverfahren hergestellten Bauteilen aus PEEK weisen im Spritzgiessverfahren hergestellte Dichtelemente ein homogenerens Gefüge auf, wobei das PEEK zudem keine Poren oder Löcher aufweist. Die höhere Warmfestigkeit von im Spritzgiessverfahren hergestellten Dichtelementen aus PEEK resultiert direkt aus der höheren Kristallinität des Kunststoffes PEEK.

Ein nach dem Spritzgiessverfahren hergestelltes Dichtelement, insbesondere ein Dichtungsring, unterscheidet sich durch strukturelle Merkmale eindeutig von mittels spanender Fertigung hergestellten Dichtelementen und weist gegenüber diesen erhebliche physikalische und mechanische Vorteile auf. Aus einem Schnitt durch das Dichtelement lässt sich eindeutig die für ein Spritzgussteil charakteristische Gefügestruktur erkennen. Ein weiteres, charakteristisches Merkmal für ein Spritzgussteil ist die Fliessrichtung des Kunststoffes oder die Ausrichtung der Füllstoffe, insbesondere wenn faserförmige Füllstoffe verwendet wurden, welche Merkmale sich zum Beispiel mit einem Durchlichtverfahren eindeutig feststellen lassen.

Werden dem Kunststoff organische Füllstoffe wie PTFE oder anorganische Füllstoffe wie Graphit und/oder faserförmige Stoffe wie Kohlefasern, Glasfasern, Aramitfasern oder Metall beigemischt, so kann dank dem Spritzgiessverfahren die Ausrichtung dieser Fasern beeinflusst werden, im Unterschied zum Extrudierverfahren, bei welchem die Fasern immer in dieselbe Richtung verlaufend ausgerichtet sind. Die Fasern des Dichtungsringes können beim Spritzgiessen in Umfangsrichtung verlaufend ausgerichtet werden, so dass auch bei faserhaltigen Dichtungsringen entlang dem Umfang ähnliche oder konstante physikalische, mechanische und tribologische Eigenschaften erzielbar sind.

Die Ausrichtung von Faserteilen in Verlaufsrichtung eines Dichtungsringes istbei der bekannten Herstellmethode durch Erstellung eines Halbzeuges mit anschliessender spanenden Fertigung auch nicht möglich. In einem Halbzeug sind üblicherweise alle Faserteile in gleicher Richtung verlaufend ausgerichtet, so dass eine anschliessende, spanende Fertigung zur Folge hat, dass die Ausrichtung der Faserteile in Umfangsrichtung eines Dichtungsrings ständig ändert,wodurch solche Dichtungsringe in Umfangsrichtung ständig ändernde mechanische Eigenschaften aufwiesen. Ein Vorteil eines erfindungsgemässen Dichtungsringes ist darin zu sehen, dass die Fasern in Umfangsrichtung eine gleichmässige Ausrichtung oder Verwirbelung aufweisen, weshalb der Dichtungsring in Umfangsrichtung konstante mechanische Eigenschaften aufweist.

Ein weiterer Vorteil ist darin zu sehen, dass die Anordnung und Konzentration der Faserteile im Dichtungsring optimierbar ist, z. B. durch die Wahl der Anzahl und der Anordnung der Angussstellen. Auch können dem Kunststoff im Verlauf des Spritzgiessens die faserförmigen Stoffe in unterschiedlichen Konzentration beigemischt werden, so dass die Dichte der faserförmigen Stoffe in dem Dichtelement lokal variiert. Dadurch sind z.B. Dichtungsringe herstellbar, deren Faseranteile ausschliesslich im Innern des Ringes liegen, jedoch nicht bis zur Aussenflächen gelangen. Weiter ist es realisierbar, dass die Dichtflächen eines Dichtungsrings keine Faseranteile aufweisen, wogegen im Bereich der übrigen Oberflächen Fasern eingelagert sind, um derart die mechanische Festigkeit des Dichtungsringes zu erhöhen. Insbesondere bei der Verwendung von Glasfasern ist dies vorteilhaft, weil diese gezieltaus dem Bereich der Dichtfläche des Dichtungsringes ferngehalten werden können und somit die Gefahr vermieden wird, dass die Oberfläche einer Kolbenstange, oder, allgemeiner ausgedrückt, die Oberfläche des Gegenlaufpartners, wie einer Kolbenstange oder einer Zylinderlaufbahn, durch solche Fasern verletzt wird. Somit können Glasfasern zur Erhöhung der mechanischen Festigkeit in einen Dichtungsring eingebracht werden, wobei eine durch eine gezielte Reduktion der Faserdichte im Bereich der Dichtfläche bzw. der Lauffläche die durch die Fasern auf einen Gegenlaufpartner bewirkte, abrasive Wirkung vermieden oder zumindest reduziert wird.

Ein weiterer Vorteil des erfindungsgemässen Verfahrens beziehungsweise des damit hergestellten Dichtungselementes ist darin zu sehen, dass die Zusammensetzung des verwendeten Kunststoffes auf einfache Weise variierbar ist. Das Dichtungselement weist immer einen Grundaufbau bestehend aus einer Kunststoffmatrix, beispielsweise aus PEEK, PFA oder PPS auf, wobei der Anteil an PEEK z.B. 70% der Gesamtmasse des Dichtelementes beträgt. Diese Kunststoffmatrix lässt sich mit unterschiedlichen Füllstoffen füllen, sodass das Dichtelement in einer grossen Variationsbreite unterschiedlicher Zusammensetzung herstellbar ist, wobei einerseits der Anteil Kunststoff, wie PEEK, zu Anteil Füllstoff variierbar ist, und andererseits verschiedene Füllstoffe eingelagert werden können. Als Füllstoffe eignen sich organische Füllstoffe wie PTFE oder anorganische Füllstoffe wie Kohlefasern, Glasfasern, Graphit oder Metalle. Das Spritzgiessverfahren ermöglicht die Anteile an PEEK, PTFE, Fasern, Graphit usw. in einem wählbaren Verhältnis zu mischen und kleine Mengen von Dichtelementen herzustellen, sodass auf kostengünstige Weise Dichtelemente mit einer Vielzahl unterschiedlicher Mischverhältnisse bzw. unterschiedlicher tribologischer, mechanischer oder thermischer Eigenschaften herstellbar sind.

Ein weiterer Vorteil des erfindungsgemässen Verfahrens ist darin zu sehen, dass ein Dichtungsring mit einer in Umfangsrichtung überlappenden Stossstelle auf einfache Weise herstellbar ist, indem das Werkzeug bzw. die Giessform zur Herstellung des Dichtungsrings zum Beispiel mit einem geringfügig wendelförmig verlaufenden Hohlraum ausgestaltet ist, sodass das Werkzeug im Bereich der Endteile des Dichtungsringes zwei voneinander getrennte Hohlräume aufweist, die sich in Umfangsrichtung des Dichtungsringes jedoch überlappen. Derart ist ein Dichtungsring mit in Umfangsrichtung überlappenden Stossstellen herstellbar, wobei der geringfügig wendelförmig ausgestaltete Dichtungsring zum Beispiel durch eine nachfolgende Wärmebehandlung in eine ebene Verlaufsrichtung umformbar ist.

Ein weiterer Vorteil des erfindungsgemässen Verfahrens ist darin zu sehen, dass Dichtelemente mit unterschiedlichen Farbenherstellbar sind, indem unterschiedlich eingefärbte Kunststoffe verwendet werden. Weiter ist auch ein partiell, unterschiedliche Farben aufweisendes Dichtelement herstellbar, indem zum Beispiel während dem Spritzgiessen eines Dichtungsringes abwechslungsweise unterschiedlich eingefärbt Kunststoffe gespritzt werden, so dass der Dichtungsring in Umfangsrichtung oder radialer Richtung mehrere unterschiedliche Farben aufweist. Diese Färbung oder partiell unterschiedliche Färbung kann z.B. als Kodierung oder als Hinweise auf die Abnutzung des Dichtelements dienen

Das erfindungsgemässe Verfahren zeichnet sich dadurch aus, dass die räumliche Lage jeder Angussstelle so gewählt wird, dass das Dichtelement frei von Anspritzpunkten ist. Dies ist insbesondere vorteilhaft, weil auch die Anspritzpunkte prinzipiell Störungen im Gefüge des Dichtelements darstellen können, die seine mechanischen, physikalischen und tribologischen Eigenschaften negativ beeinflussen können.

Je nach der Geometrie des herzustellenden Dichtelements kann es vorteilhaft sein, den Kunststoff an genau einer Angussstelle in die Giessform einzubringen, weil dadurch das Spritgiessverfahren besonders einfach wird. Die räumliche Lage dieser Angussstelle wird dabei vorteilhafterweise so gewählt, dass der von dem Kunststoff in der Giessform zurückzulegende Weg minimal ist, denn die Praxis zeigt, dass sich kurze Strömungsoder Fliesswege des Kunststoffs insbesondere auf die mechanischen Eigenschaften (z. B. Festigkeit) des Dichtelements positiv auswirken.

Insbesondere für die Herstellung ringförmig ausgestalteter Dichtelemente ist es vorteilhaft, wenn jede Angussstelle derart angeordnet wird, dass eine ausgeprägte in radialer Richtung verlaufende Strömungsrichtung des Kunststoffs erzeugt wird. Speziell bevorzugt wird für die Herstellung ringförmiger Dichtelemente, den Kunststoff an einer etwa im geometrischen Mittelpunkt des ringförmigen Dichtelements angeordneten Angussstelle in die Giessform einzubringen. Durch diese Massnahme werden zum einen die von dem flüssigen Kunststoff zurückzulegenden Wege möglichst kurz gehalten und zum anderen ist für alle Punkte auf einer Umfangslinie der Abstand von der Angussstelle der gleiche. Dies hat den Vorteil, dass die physikalischen, mechanischen und tribologischen Eigenschaften des Dichtelements in Umfangsrichtung gesehen in sehr guter Weise homogen sind.

Bevorzugt wird zur Herstellung eines im wesentlichen ringförmigen Dichtelements wie folgt vorgegangen:

Zunächst wird im Spritzgiessverfahren ein schirmförmiger Giessling hergestellt, indem durch einen Angusskanal der flüssige Kunststoff in das Zentrum eines im wesentlichen scheibenförmigen Hohlraums einer Giessform eingebracht wird und erstarrt. Der schirmförmige Giessling wird dann entformt und ein zentraler Bereich des schirmförmigen Giesslings, der den Stiel umfasst, wird entfernt, so dass das im wesentlichen ringförmige Dichtelement entsteht.

Auf diese Weise lässt sich auf sehr einfache und kostengünstige Art ein ringförmiges Dichtelement herstellen, dessen physikalische, mechanische und tribologische Eigenschaften im Hinblick auf die Verwendung in trockenlaufenden Kolbenkompressoren sehr günstig sind.

Im folgenden wird die Erfindung anhand der Zeichnung und anhand von mehreren Ausführungsbeispielen für Dichtelemente im Detail beschrieben. In der nicht massstäblichen und teilweise schematischen Zeichnung zeigen:
- Fig. 1: ein als Dichtungsring ausgestaltetes Dichtelement;
- Fig. 2: ein weiteres Ausführungsbeispiel eines Dichtungsringes;
- Fig. 2a: ein Querschnitt durch den Dichtungsring gemäss Fig. 2 entlang der Linie B-B;
- Fig. 2b: ein Querschnitt durch den Dichtungsring gemäss Fig. 2 entlang der Linie C-C;
- Fig. 2c: eine Seitenansicht der Stossstelle des Dichtungsringes gemäss Fig. 2 aus Richtung E;
- Fig. 2d: ein vergrössert dargestellter Teilabschnitt des Dichtungsringes gemäss Fig. 2;
- Fig. 3: ein in einem trockenlaufenden Kolbenkompressor eingebauter Dichtungsring;
- Fig. 4: eine Vorrichtung zur Durchführung des Spritzgiessverfahrens;
- Fig. 5: eine weitere Vorrichtung zur Durchführung des Spritzgiessverfahrens;
- Fig. 6a: ein weiteres Dichtelement;
- Fig. 6b: ein weiterer Dichtungsring, bestehend aus einer Mehrzahl von Dichtelementen gemäss Fig. 6a;
- Fig. 7: eine Schnittdarstellung einer Giessform für das erfindurigsgemässe Verfahren;
- Fig. 8: eine Aufsicht auf einen Giessling, der mit der Giessform aus Fig. 7 herstellbar ist; und
- Fig. 9: einen Längsschnitt durch den Giessling aus Fig. 8.

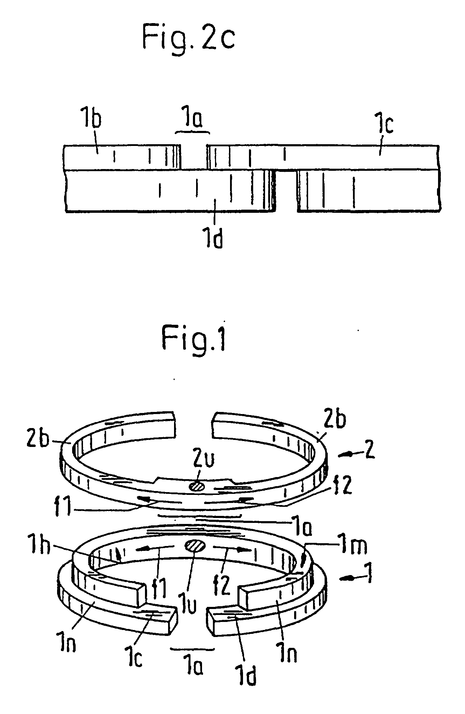

Die in den Figuren 1,2,6a und 6b dargestellten Dichtelemente sind nicht Gegenstand der Erfindung, weil sie nicht frei von Anspritzpunkten sind. Diese Dichtelemente können jedoch ebenfalls mit dem erfindungsgemässen Verfahren hergestellt werden, sind dann aber frei von Anspritzpunkten.

Fig. 1 zeigt eine Dichtungsanordnung für eine Kolbenstange 4 eines trockenlaufenden Kolbenkompressors. Die Anordnung besteht aus einem Dichtungsring 1 sowie einen diesen umgebenden Deckring 2. Der Dichtungsring 1 läuft aus in zwei Endteile 1c,1d, wobei sich zwischen den Endteilen 1c,1d eine Teilung 1a ergibt. Der Dichtungsring 1 weist einen Anspritzpunkt 1u auf, welcher von der Angussstelle resultiert. Der Dichtungsring 1 ist mit einem Spritzgiessverfahren hergestellt, wobei im vorliegenden Ausführungsbeispiel des Dichtungsrings 1 die Angussstelle so angeordnet ist, dass der Anspritzpunkt1u symmetrisch bezüglich dem Dichtungsring 1 angeordnet ist. Das während dem Spritzvorgang über die Angussstelle in den Hohlraum des Werkzeuges bzw. der Giessform einfliessende Kunststoff breitet sich in Richtung f1,f2 fliessend im Hohlraum aus, bis der Hohlraum aufgefüllt ist und dadurch der Dichtungsring 1 erstellt ist. Der Dichtungsring 1 weist zwei Dichtflächen 1h, 1m auf, die eine Dichtfläche 1h liegt an der sich bewegenden Kolbenstange 4 an, während die zweite Dichtfläche 1m auf einem festen Teil, dem Kammerring 5 aufliegt. Beide Dichtflächen 1h,1m müssen präzisen geometrischen Anforderungen wie zum Beispiel bezüglich Krümmungsradius, Ebenheit oder Oberflächenstruktur genügen. Andererseits ist es eine bekannt Tatsache, dass ein im Spritzgiessverfahren hergestelltes Kunststoffteil einen Schwund aufweist. Diese beiden an sich widersprüchlichen Bedingungen werden im erfindungsgemässen Spritzgiessverfahren derart gelöst, dass der Schwund derart kontrolliert wird, dass die geometrischen Abmessungen der beiden Dichtflächen 1h,1m während dem Herstellen und Abkühlen des Dichtungsringes masshaltig bleiben, wogegen bei den restlichen Flächen des Dichtungsringes 1 ein Schwund bewusst in Kauf genommen wird. Dieses Vorgehen ermöglicht die Herstellung eines Dichtungsringes im Spritzgiessverfahren, dessen Dichtflächen 1h, 1m sehr genaue geometrische Abmessungen aufweist. Eine anschliessende mechanische Nachbearbeitung des Dichtungsringes ist somit nicht erforderlich. Trotzdem kann es sich als vorteilhaft erweisen, die erzeugten Flächen in einem nachfolgenden Schleifprozess weiter zu bearbeiten, um besonders präzise ausgestaltete Oberflächen zu erlangen.

Auf dieselbe Weise ist auch ein als Kolbenring ausgestaltetes Dichtelement herstellbar. An Stelle einer masshaltigen, gegen innen orientierten Fläche, wie dies beim Dichtungsring 1 erforderlich ist, bedarf der Kolbenring statt dessen eine masshaltige, umfangsseitig gegen Aussen orientierte Fläche. Somit ist ein Kolbenring auf einfache Weise mit dem erfindungsgemässen Spritzgiessverfahren herstellbar.

Fig. 1 zeigt weiter einen Deckring 2 mit Endbereichen 2b. Dieser Deckring 2 weist einen Anspritzpunkt 2u auf, von welchem aus der Kunststoff während dem Herstellungsverfahren in Richtung f1,f2 fliessend den Hohlraum des Werkzeuges ausfüllt. Auch beim Deckring 2 besteht die Möglichkeit zwei Flächen mit hoher geometrischen Genauigkeit herzustellen.

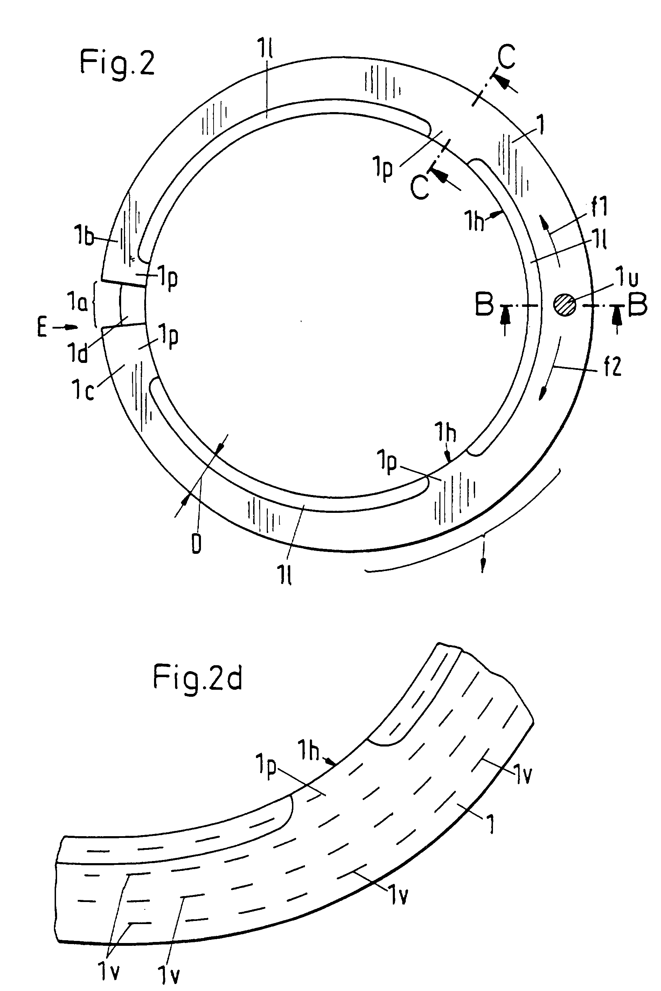

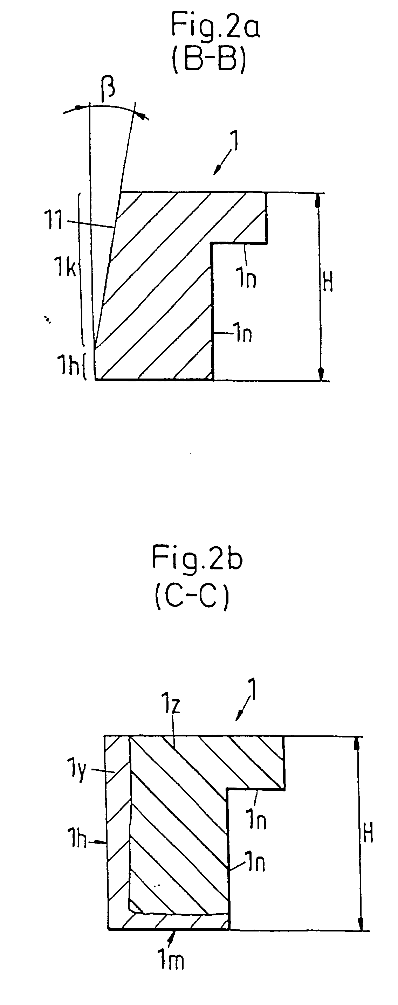

Fig. 2 zeigt die Aufsicht auf ein weiteres Ausführungsbeispiel eines Dichtungsringes 1 mit Anspritzpunkt 1u und Fliessrichtung f1,f2 des Kunststoffes. Der Dichtungsring 1 weist zwei masshaltige Dichtflächen 1m,1h auf. Der Dichtungsring 1 weist eine Teilung 1a mit einer in Umfangsrichtung überlappenden Stossstelle auf, wobei der Dichtungsring 1 in zwei Endabschnitte 1b,1c ausläuft, wobei am einen Endabschnitt 1c das Endteil 1d angeordnet ist, derart, dass eine in Umfangsrichtung überlappende Stossstelle entsteht. Der Dichtungsring 1 weist eine Mehrzahl von über den Umfang verteilt angeordnete Stege 1p auf, wobei in Fig. 2b ein Querschnitt durch einen Steg 1p entlang der Linie C-C dargestellt ist. Ein Steg 1p weist eine über die gesamte Höhe H des Dichtungsringes 1 verlaufende Dichtfläche 1h auf. Ein Schnitt durch eine weitere Stelle entlang der Linie B-B ist in Fig. 2a dargestellt. Hier verläuft die masshaltige Dichtfläche 1h nur über einen geringen Teilbereich der Höhe H, während sich die Fläche 1l im Bereich 1k konisch erweitert unter einem Winkel β. Mit dem erfindungsgemässen Spritzgiessverfahren ist auch ein Dichtungsring 1 mit einer Vielzahl von in Umfangsrichtung sehr schmal ausgestalteten Stegen 1p herstellbar. Im Querschnitt durch den Dichtungsring 1 ist in Fig. 2b die unterschiedliche Dichte eingelagerter faserförmiger Stoffe dargestellt. Die Fasern verlaufen in Umfangsrichtung des Dichtungsringes 1 und daher senkrecht zur dargestellten Betrachtungsebene. Die Fasern wurden im dargestellten Ausführungsbeispiel derart eingelagert, dass in einem ersten Bereich 1z eine Zone mit einer hohen Faserdichte ausgebildet wird wogegen in einem zweiten Bereich 1y eine Zone mit einer sehr geringen Faserdichte entsteht. Somit weisen die für die Dichtfunktion wichtigen Flächen 1h, 1m eine geringe Faserdichte oder gar keine Fasern auf. Eine Lauffläche oder Dichtfläche mit einer geringen Dicht an Fasern, zum Beispiel an Glasfasern, bewirkt eine weit geringere abrasive Wirkung auf ein Gegenstück als eine entsprechende Fläche mit einer hohen Dichte an Glasfasern.

Fig. 2c zeigt die Seitenansicht des Dichtungsringes 1 gemäss Fig. 2 aus Blickrichtung E mit Endabschnitten 1b,1c und dem den Endabschnitt 1c überlappenden Endteil 1d. Eine derartig überlappende Stossstelle lässt sich mit dem erfindungsgemässen Verfahren auf einfache Weise derart herstellen, dass der Hohlraum des Werkzeuges leicht wendelförmig verlaufend ausgestaltet ist, derart, dass das Endteil 1d und der Endabschnitt 1c in zwei voneinander getrennte Hohlräume auslaufen. Nach erfolgtem Spritzgiessen kann der Dichtungsring 1 durch Pressen oder durch Wärmebehandlung derart behandelt werden, dass der ursprünglich wendelförmig verlaufende Dichtungsring 1 in einen in einer Ebene verlaufenden Dichtungsring 1 umgestaltet wird.

Fig. 2d zeigt, als Teilabschnitt des Dichtungsringes 1 gemäss Fig. 2, den Verlauf von innerhalb des Dichtungsringes 1 eingelagerten Fasern 1v. Diese Fasern 1v sind bezüglich der Verlaufsrichtung des Dichtungsringes 1 ausgerichtet. Daher weist der Dichtungsring 1 in Umfangsrichtung gleichbleibende physikalische, mechanische oder tribologische Eigenschaften auf. Bei durch das Spritzgussverfahren hergestellten Dichtungsringen 1 weisen insbesondere die Dichtflächen 1h ein homogenes Gefüge auf.

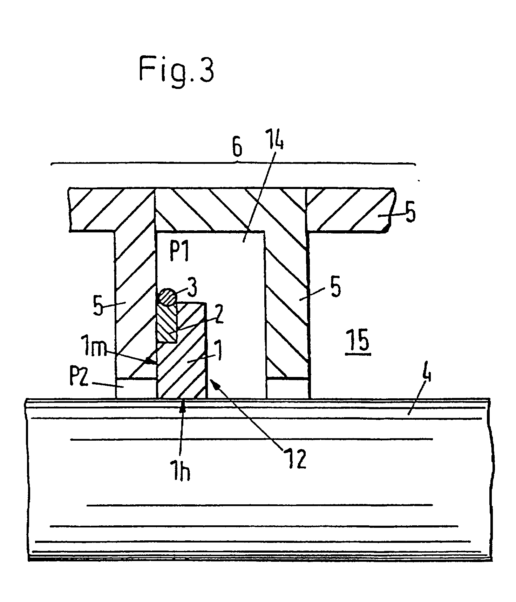

Fig. 3 zeigt einen Längsschnitt durch eine Packung 6 eines trockenlaufenden Kolbenkompressors mit Kolbenstange 4, wobei die Dichtungsanordnung 12 in einer Dichtungskammer 14 angeordnet ist und einen Dichtungsring 1, einen Deckring 2 sowie eine Schlauchfeder 3 umfasst. Die eine masshaltige Dichtfläche 1h des Dichtungsringes 1 liegt auf der Kolbenstange 4 auf, wogegen die andere masshaltige Dichtfläche 1m an einem Kammerring 5 aufliegt, um dadurch den Druck des Zylinderraumes 15 abzudichten. Dabei ist der Druck p1 höher als der Druck p2.

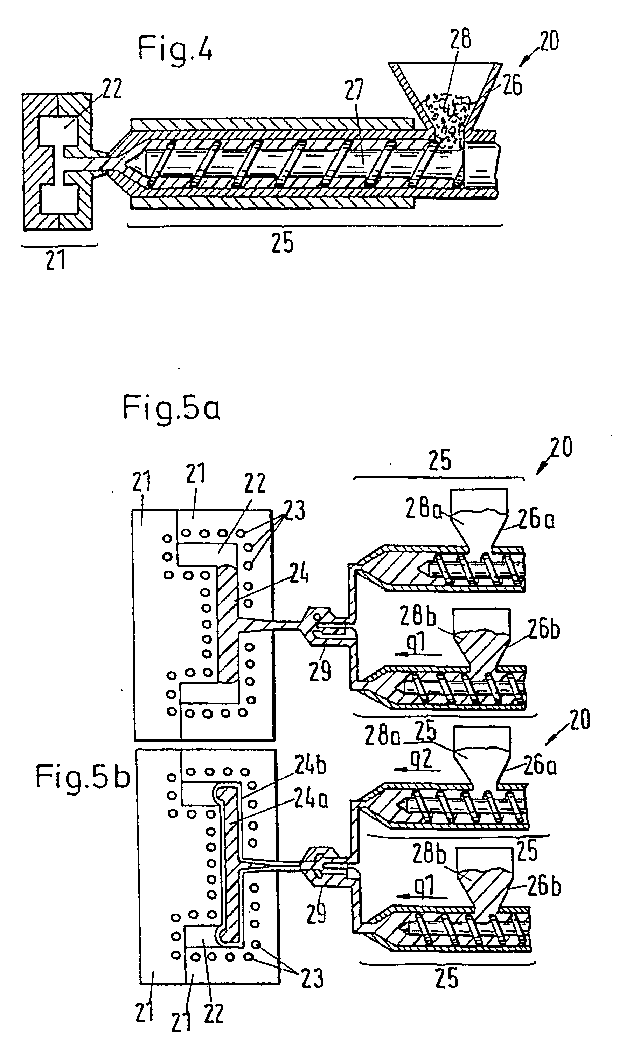

Fig. 4 zeigt eine Spritzgiessvorrichtung 20 zur Durchführung des Spritzgiessverfahrens. Die Spritzgiessmaschine 25 wird über den Trichter 26 mit granulierter, kalter Formmasse beschickt. Durch die rotierende Schnecke 27, deren Zylinder von aussen beheizt ist, wird die Formmasse geschmolzen, plastifiziert und zur Schneckenspitze gefördert. Durch axiale Verschiebung der Schnecke 27 wird die Formmasse unter hohem Druck durch eine Düse und Angiesskanal in das mit Heizelementen 23 temperierte Werkzeug 21 bzw die Giessform gespritzt. Dabei fliesst der plastische Kunststoff in den Hohlraum 22 des Werkzeuges 21 bis dieser gefüllt ist, und somit das Dichtelement 1 erstellt ist. Dem Trichter 26 kann entweder ein Granulat 28 bestehend aus nur einem einzigen Kunststoffmaterial zugeführt werden, oder auch ein Gemisch unterschiedlicher Kunststoffmaterialen wie PEEK, enthaltend zusätzlich Komponenten wie zum Beispiel PTFE, sowie Fasern wie Kohlefasern, Glasfasern oder Aramitfasern.

Fig. 5a zeigt eine weitere Spritzgiessvorrichtung 20 mit zwei unabhängigen Spritzgiessmaschinen 25, welche über eine Mischvorrichtung 29 den Kunststoff 24 dem Werkzeug 21 mit Hohlraum 22 zuführen. Im dargestellten Ausführungsbeispiel wird der Inhalt 28b des Trichters 26b in Richtung q1 fliessend dem Werkzeug 21 zugeführt. Die Mischvorrichtung 29 kann zu einem wählbaren Zeitpunkt umgeschaltet werden, derart, dass nun der Inhalt 28a des Richters 26a dem Werkzeug 21 zugeführt wird. Derart sind Dichtelemente 1 bestehend aus unterschiedlichen Kunststoffen herstellbar. Es können auch dieselben Kunststoffe, jedoch mit unterschiedlichem Farbton verwendet werden, sodass zum Beispiel ein als Dichtungsring ausgestaltetes Dichtelement in Umfangsrichtung eine Farbkodierung aufweist.

Fig. 5b zeigt dieselbe Spritzgiesseinrichtung 20, wie diese bereits in Fig. 5a dargestellt wurde, wobei im Gegensatz zu Fig. 5a die beiden Spritzgiessmaschinen 25 gleichzeitig Kunststoff in Richtung q1, q2 fliessend abgeben. Beide Trichter 26a, 26b weisen unterschiedliche Kunststoffe auf. Diese Mehrkomponentenspritztechnik erlaubt ein Dichtelement 1 mit eine kompakten Aussenhaut 24b und bestehend aus dem einen Kunststoff 28b, sowie einen Kern 24a, bestehend aus dem anderen Kunststoff 28a herzustellen.

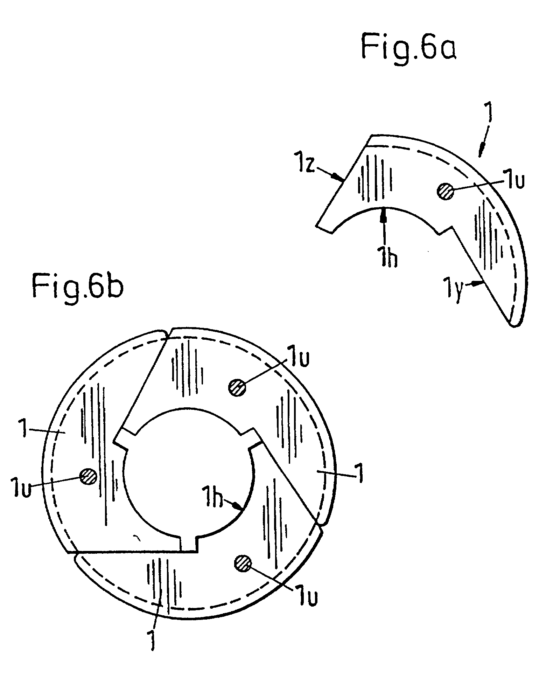

Fig. 6a zeigt ein Dichtelement 1 mit Anspritzpunkt 1u und masshaltigen Flächen 1h, 1y, 1z. Fig. 6b zeigt ein Dichtungsring bestehend aus drei in Umfangsrichtung aneinanderliegend geordneten Dichtelementen 1. Alle Dichtelemente 1 sind mittels einem Spritzgiessverfahren hergestellt und weisen einen Anspritzpunkt 1u auf. Die Dichtelemente 1 werden derart hergestellt, dass sie der Kolbenstange 4 zugewandte Dichtfläche 1h masshaltig ausgestaltet ist. Weiter sind die gegenseitigen Berührungsflächen 1y,1z masshaltig ausgestaltet.

Das erfindungsgemässe Verfahren zeichnet sich insbesondere dadurch aus, dass die räumliche Lage jeder Angussstelle beim Spritzgiessverfahren so gewählt wird, dass das Dichtelement frei von Anspritzpunkten ist. Abgesehen von diesem Unterschied gelten die vorne stehenden Erläuterungen bezüglich des Spritzgiessverfahrens bzw. bezüglich der gemäss diesem hergestellten Dichtelemente in sinngemäss gleicher Weise auch für das erfindungsgemässe Verfahren.

Die Anspritzspunkte können auch nachteilige Störstellen im Gefüge des Dichtelements darstellen, die sich negativ auf die mechanischen, physikalischen und tribologischen Eigenschaften des Dichtelements auswirken. Es ist ein besonderer Vorteil des erfindungsgemässen Verfahrens, dass solche potentiellen Störstellen vermieden werden.

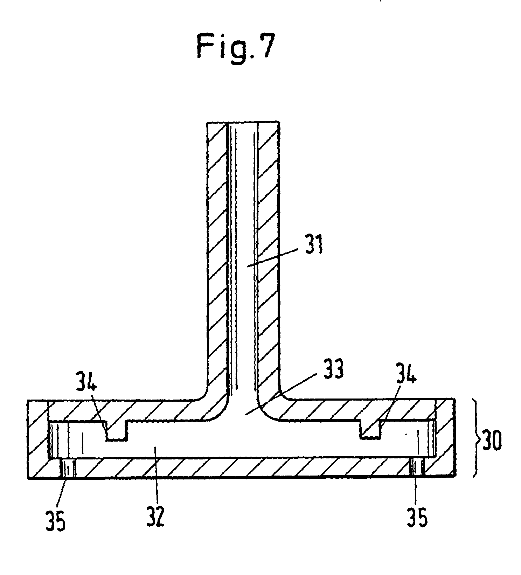

Im folgenden wird das erfindungsgemässe Verfahren beispielhaft anhand der Herstellung eines geschlossenen ringförmigen Dichtelements (endloser Ring) und unter Bezugnahme auf die Figuren 7 bis 9 näher erläutert.

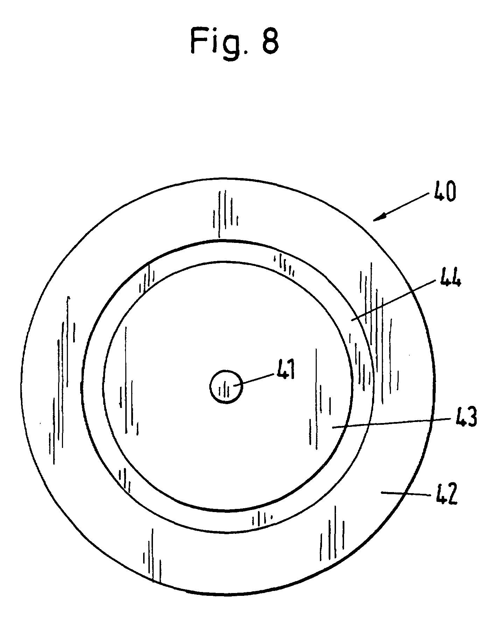

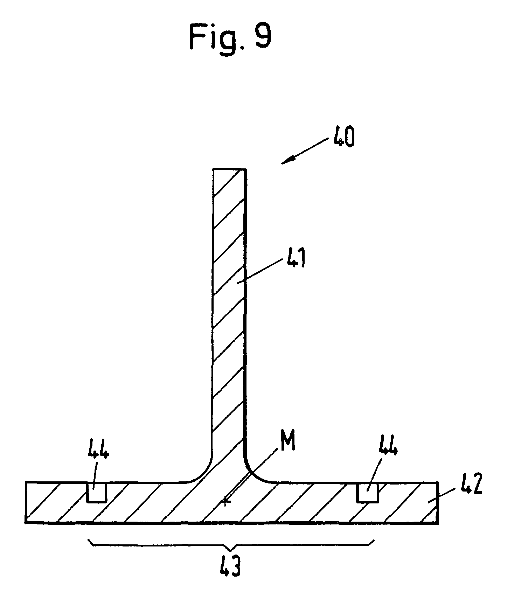

Fig. 7 zeigt in einer Schnittdarstellung eine Giessform 30 mit einem im wesentlichen scheibenförmigen Hohlraum 32, in dessen Zentrum der flüssige Kunststoff durch einen Angusskanal 31 einbringbar ist. Fig. 8 zeigt eine Aufsicht auf einen Giessling 40, der mit der Giessform 30 im Spritzgiessverfahren herstellbar ist, und Fig. 9 zeigt einen Längsschnitt durch den Giessling 40 aus Fig. 8.

Die Giessform 30 kann in analoger Weise, wie dies in den Fig. 4, 5a, 5b dargestellt und den diesbezüglichen Erläuterungen vorne erklärt ist, mittels der Spritgiessvorrichtung 20 bzw der Spritzgiessmaschine 25 mit flüssigem Kunststoff gefüllt werden. Dazu wird der Angusskanal 31 (Fig. 7) mit der Spritzgiessmaschine 25 (Fig. 4, 5a, 5b) bzw. mit der Mischvorrichtung 29 verbunden, so dass der flüssige Kunststoff durch den Angusskanal 31 (Fig. 7) in den Hohlraum 32 der Giessform 30 einbringbar ist. Die Angussstelle 33 liegt dort, wo der Angusskanal 31 in den Hohlraum 32 der Giessform 30 mündet.

Die Giessform 30 hat ferner eine im wesentlichen ringförmige Rippe 34, welche den Angusskanal 31 konzentrisch umgibt und in den im wesentlichen scheibenförmigen Hohlraum 32 vorsteht. Zusätzlich können eine oder mehrere Auslassbohrungen 35 vorgesehen sein, durch welche z. B. Gasblasen beim Befüllen der Giessform 30 entweichen können.

Beim Befüllen der Giessform 30 fliesst der flüssige Kunststoff durch den Angusskanal 31 und strömt dann von der Angussstelle 33 in radialer Richtung in den scheibenförmigen Hohlraum 32 bis dieser vollständig gefüllt ist. Nach der Erstarrung des Kunststoffs wird der Giessling 40 entformt und hat die in Fig. 8 bzw. Fig. 9 dargestellte schirmförmige Gestalt, das heisst er hat einen Stiel 41, der durch den Angusskanal 31 geformt ist, sowie eine Scheibe 42, die durch den Hohlraum 32 geformt ist. Bedingt durch die Rippe 34 weist die Scheibe 42 des Giesslings 40 eine ringförmige Nut 44 auf, welche konzentrisch zum Stiel 41 verläuft. Um das ringförmige Dichtelement zu erzeugen, dessen geometrischer Mittelpunkt M etwa mit der Angussstelle 33 übereinstimmt, wird ein zentraler Bereich 43 des Giesslings 40 entfernt. Dieser zentrale Bereich 43 umfasst den Stiel 41 des Giesslings 40 sowie denjenigen Teil der Scheibe 42, der von der ringförmigen Nut 44 umgeben wird. Das Entfernen des zentralen Bereichs 43 kann beispielsweise durch Herausbrechen, Herausschlagen, Schneiden oder Sägen erfolgen. Der Sinn der ringförmigen Nut 44 ist es, das Entfernen des zentralen Bereichs 43 zu erleichtern. Falls erforderlich, kann die innere Begrenzungsfläche des ringförmigen Dichtelements nach dem Entfernen des zentralen Bereichs 43 noch nachbearbeitet, z. B. geschliffen werden.

Bei dem hier beschriebenen Beispiel des erfindungsgemässen Verfahrens wird der Kunststoff an einer Angussstelle 33 in die Giessform 30 eingebracht, deren räumliche Lage so gewählt ist, dass der von dem Kunststoff in der Giessform zurückzulegende Weg minimal ist. Dies ist vorteilhaft, weil sich kurze Fliesswege des Kunststoffs positiv auf die mechanischen Eigenschaften des Dichtelements auswirken,. beispielsweise seine Festigkeit und speziell seine Biegefestigkeit erhöhen. Insbesondere wird der Kunststoff an einer etwa im geometrischen Mittelpunkt M des ringförmigen Dichtelements angeordneten Angussstelle 33 in die Giessform 30 eingebracht. Dadurch haben alle Punkte, die auf derselben Umfangslinie liegen, im wesentlichen den gleichen Abstand von der Angussstelle 33. Dies gilt insbesondere auch für die innere und die äussere Begrenzungsfläche des ringförmigen Dichtelements. Daraus resultiert der Vorteil, dass das Dichtelement in Umfangsrichtung gesehen sehr homogene mechanische, physikalische und tribologische Eigenschaften aufweist, weil die Ausbreitung des flüssigen Kunststoffs in der Giessform 30 im wesentlichen radialsymmetrisch erfolgt.

Bei der Herstellung des Dichtelements fällt kaum Abfall an, weil der zentrale Bereich 43 in einfacher Weise wieder eingeschmolzen werden kann und somit für weitere Giessvorgänge zur Verfügung steht. Dies ist insbesondere bei der Verwendung teurer Kunststoffmaterialien, wie beispielsweise PEEK, unter wirtschaftlichen Aspekten ein bedeutender Vorteil.

Natürlich ist das erfindungsgemässe Verfahren nicht auf die hier detailliert beschriebene Herstellung von endlosen Ringen beschränkt. So lassen sich beispielsweise durch entsprechende Ausgestaltung des Hohlraums 32 und/oder der Rippe 34 der Giessform 30 sehr viele Bauteilgeometrien des Dichtelements realisieren. Insbesondere können alle die in den Fig. 1, 2a-d, 6a ,6b dargestellten Dichtelemente ebenfalls mittels des erfindungsgemässen Verfahrens hergestellt werden, sind jedoch dann frei von Anspritzpunkten.

Der Dichtungsring 1 gemäss Fig. 1 kann beispielsweise hergestellt werden, indem ein endloser Ring an einer Stelle aufgetrennt wird bzw. ein Segment aus einem endlosen Ring herausgetrennt wird, so dass die Teilung 1a entsteht. Alternativ kann auch der Hohlraum 32 der Giessform 30 so ausgestaltet werden, dass die Scheibe 42 des Giesslings 40 eine entsprechende Ausnehmung aufweist.

Eine überlappende Stossstelle (siehe Fig. 2c) kann beispielsweise auch in sinngemäss gleicher Weise wie vorne im Zusammenhang mit Fig. 2c erläutert erzeugt werden. Auch eine sich konisch erweiternde Fläche 11 (siehe Fig. 2a) ist durch eine dementsprechende Ausgestaltung der Wandung der Giessform 30 realisierbar. Nicht-rechteckige Querschnitte des Dichtelements (siehe Fig. 2b) können z. B. ebenfalls durch eine dementsprechende Geometrie des Hohlraums 32 der Giessform 30 erzeugt werden.

Die Herstellung segmentierter Dichtelemente (siehe Fig. 6a und 6b) kann z. B. durch Schneiden eines endlosen Rings hergestellt werden. Auch ist es möglich, jedes Segment (wie es z. B. in Fig 6a dargestellt ist) einzeln, das heisst in einem separaten Giessvorgang, herzustellen. Dabei wird vorteilhafterweise die Angussstelle von ihrer räumlichen Lage so gewählt, dass sie sich etwa im Krümmungsmittelpunkt des Segments befindet.

Bei der Ausführungsform des erfindungsgemässen Verfahrens wird eine ausgeprägte in radialer Richtung verlaufende Strömungsrichtung des Kunststoffs in der Giessform erzeugt. Bei der Verwendung von Kunststoffen, denen faserförmige Stoffe wie Kohlefasern, Aramitfasern, Glasfasern oder Metall beigemischt sind, zeigt sich, dass sich diese faserförmigen Stoffe beim Spritzgiessen mit in radialer Richtung fliessendem Kunststoff hauptsächlich quer zur Fliessrichtung des Kunststoffs ausrichten, so dass die faserförmigen Stoffe in dem ringförmigen Dichtelement im wesentlichen in Umfangsrichtung ausgerichtet sind. Dies wirkt sich insbesondere auf die Homogenität der physikalischen, mechanischen und tribologischen Eigenschaften in Umfangsrichtung des Dichtelements positiv aus. Natürlich ist es auchmöglich, dem Kunststoff die faserförmigen Stoffe in unterschiedlichen Konzentrationen beizumischen, so dass die Dichte der faserförmigen Stoffe in dem Dichtelement lokal variiert. So können - in sinngemäss gleicher Weise wie bereits vorne beschrieben - Dichtelemente hergestellt werden, deren für die Dichtfunktion wichtigen Flächen kaum oder keine Fasern enthalten, während in anderen Bereichen des Dichtelements deutlich höhere Faserdichten realisiert sind. Dies lässt sich beispielsweise für ein ringförmiges Dichtelement mit aussenliegender Dichtfläche erreichen, indem beim Spritzgiessen die Giessform zunächst partiell mit einem Kunststoff gefüllt wird, der keine oder nur sehr wenige faserförmige Beimischungen enthält, und anschliessend ein Kunststoff mit höherer Faserdichte in die Giessform eingebracht wird.

Neben den konkret beschriebenen Ausgestaltungen von Dichtelementen bzw. Dichtungsringen sind natürlich auch alle übrigen, bekannten Ausgestaltungen von Dichtelementen bzw. Dichtungsringen mit dem erfindungsgemässen Verfahren herstellbar.

## Patentansprüche

1. Verfahren zur Herstellung eines aus zumindest einem Kunststoff bestehenden Dichtelements für einen insbesondere trockenlaufenden Kolbenkompressor, wobei das Dichtelement (1,2) durch ein Spritzgiessverfahren hergestellt wird, bei welchem der flüssige Kunststoff an mindestens einer Angussstelle (33) in eine Giessform (21,30) eingebracht wird, **dadurch gekennzeichnet dass** die räumliche Lage jeder Angussstelle (33) so gewählt wird, dass das Dichtelement (1,2) durch Entfernen des die Angussstelle (33) enthaltenden Bereichs frei von Anspritzpunkten (1u) ist.

2. Verfahren nach Anspruch 1, bei welchem der Kunststoff an genau einer Angussstelle (33) in die Giessform (21,30) eingebracht wird, wobei die räumliche Lage der Angussstelle (33) so gewählt wird, dass der von dem Kunststoff in der Giessform (21,30) zurückzulegende Weg minimal ist.

3. Verfahren nach einem der Ansprüche 1 oder 2, wobei jede Angussstelle (33) derart angeordnet ist, dass eine ausgeprägte, insbesondere bei einem ringförmig ausgestalteten Dichtelement in radialer Richtung verlaufende, Strömungsrichtung des Kunststoffs in der Giessform (21,30) erzeugt wird.

4. Verfahren nach einem der vorangehenden Ansprüche, wobei zur Herstellung eines im wesentlichen ringförmigen Dichtelements (1,2) der Kunststoff an einer etwa im geometrischen Mittelpunkt (M) des ringförmigen Dichtelements (1,2) angeordneten Angussstelle (33) in die Giessform (30) eingebracht wird.

5. Verfahren nach einem der vorangehenden Ansprüche, wobei zur Herstellung eines im wesentlichen ringförmigen Dichtelements (1,2)
a) im Spritzgiessverfahren ein schirmförmiger Giessling (40) hergestellt wird, indem durch einen Angusskanal (31) der flüssige Kunststoff in das Zentrum eines im wesentlichen scheibenförmigen Hohlraums (32) einer Giessform (30) eingebracht wird und erstarrt,
b) der schirmförmige Giessling (40) entformt wird, und
c) ein zentraler Bereich (43) des schirmförmigen Giesslings (40) entfernt wird, so dass das im wesentlichen ringförmige Dichtelement entsteht.

6. Verfahren nach einem der vorangehenden Ansprüche, wobei der Kunststoff zumindest PEEK (Polyetheretherketon) oder PFA (Perfluoralkoxy-Copolymer) oder PPS (Polyphenylen-Sulfid) umfasst.

7. Verfahren nach einem der vorangehenden Ansprüche, wobei dem Kunststoff organische Füllstoffe wie PTFE, oder anorganische Füllstoffe wie Graphit und/oder faserförmige Stoffe wie Kohlefasern, Aramitfasern, Glasfasern oder Metall beigemischt werden.

8. Verfahren nach Anspruch 7, wobei dem Kunststoff die faserförmigen Stoffe (1v) in unterschiedlichen Konzentrationen beigemischt werden, so dass die Dichte der faserförmigen Stoffe in dem Dichtelement (1,2) lokal variiert.

9. Verfahren nach einem der vorangehenden Ansprüche, wobei der während dem Abkühlen des Dichtelementes (1,2) auftretende Materialschwund derart kontrolliert wird, dass zumindest zwei Flächen (1h, 1m) des Dichtelements (1,2) masshaltig ausgestaltet werden.

10. Verfahren nach einem der vorangehenden Ansprüche, wobei das Dichtelement (1,2) mit zumindest einem eingefärbten Kunststoff hergestellt wird.

11. Dichtelement, insbesondere für einen Dichtungsring oder einen Kolbenring in einem trockenlaufenden Kolbenkompressor, hergestellt nach einem Verfahren gemäss einem der Ansprüche 1 bis 10, welches als offener oder geschlossener ringförmiger Körper, als Einringssystem oder als segmentierter Ring ausgestaltet ist.

12. Dichtelement nach Anspruch 11, welches als Dichtungsring mit einer überlappenden Stossstelle ausgestaltet ist.

13. Dichtelement nach einem der Ansprüche 11-12, mit einer ringförmigen Ausbildung und mit in Umfangsrichtung verlaufenden faserförmigen Stoffen.

## Claims

1. Method of manufacturing a sealing element consisting of at least one plastic for a piston compressor, in particular for a dry running piston compressor, wherein the sealing element (1,2) is manufactured by an injection moulding process in which the liquid plastic is injected into an injection mould (21,30) at least at one injection gate or location (33), **characterised in that** the spatial position of each injection gate (33) is chosen in such a manner that the sealing element (1,2) is free from injection points (1u), by removing the area containing the injection gate (33).

2. Method in accordance with claim 1, in which the plastic is introduced into the injection mould (21,30) at just one injection gate (33), with the spatial position of the injection gate (33) being chosen in such a manner that the distance travelled by the plastic in the injection mould (21,30) is a minimum.

3. Method in accordance with claim 1 or 2, wherein each injection gate (33) is arranged in such a manner that a pronounced direction of flow of the plastic extending in the radial direction in the injection mould is produced, in particular in a sealing element made in the shape of a ring.

4. Method in accordance with one of the preceding claims, wherein the plastic is injected into the injection mould (30) at an injection gate (33) arranged approximately at the geometric centre (M) of the ring shaped sealing element (1,2) for the manufacture of a substantially ring shaped sealing element (1,2).

5. Method in accordance with one of the preceding claims wherein, for the manufacture of a substantially ring shaped sealing element (1,2),
a) an umbrella shaped moulded part (40) is formed by the injection moulding process in that the liquid plastic is injected through an injection passage (31) into the centre of a substantially disc shaped cavity (32) of an injection mould (30) and solidifies,
b) the umbrella shaped moulded part (40) is removed from the mould, and
c) a central region (43) of the umbrella shaped moulded part (40) is removed so that a substantially ring shaped sealing element arises.

6. Method in accordance with one of the preceding claims, wherein the plastic comprises at least PEEK (poly(ether ether ketone)) or PFA (perfluoralkoxycopolymer) or PPS (poly(phenylene sulphide)).

7. Method in accordance with one of the preceding claims wherein organic fillers such as PTFE or inorganic fillers such as graphite and/or fibrous materials such as carbon fibres, aramite (aramide) fibres, glass fibres or metal are admixed to the plastic.

8. Method in accordance with claim 7, wherein the fibrous materials (1v) are admixed to the plastic in different concentrations so that the density of the fibrous materials in the sealing element (1,2) varies locally.

9. Method in accordance with one of the preceding claims, wherein the shrinkage of material occurring during the cooling down of the sealing element (1,2) is controlled in such a manner that at least two surfaces (1h,1m) of the sealing element (1,2) are executed to be accurate to size.

10. Method in accordance with one of the preceding claims, wherein the sealing element is manufactured with at least one dyed plastic.

11. Sealing element, in particular for a sealing ring or a piston ring in a dry running piston compressor, manufactured by a method in accordance with one of the claims 1 to 10, which is designed as an open or closed ring shaped body, as a single ring system or as a segmented ring.

12. Sealing element in accordance with claim 11 which is designed as a sealing ring with an overlapping gap joint.

13. Sealing element in accordance with one of the claims 11 to 12 with a ring shaped design and with fibrous materials extending in the peripheral direction.

## Revendications

1. Procédé de fabrication d'un élément d'étanchéité, formé d'au moins une matière synthétique pour un compresseur à piston fonctionnant en particulier à sec, l'élément d'étanchéité (1,2) étant fabriqué par un procédé de moulage par injection, lors duquel la matière synthétique liquide est introduite depuis au point un point de coulée (33) dans un moule de coulée (21,30), **caractérisé en ce que** la position spatiale de chaque point de coulée (33) est choisie de manière que l'élément d'étanchéité (1,2), par enlèvement de la zone contenant le point de coulée (33), soit exempt de tout point de bavure d'injection (1u).

2. Procédé selon la revendication 1, dans lequel la matière synthétique est introduite en précisément un point de coulée (33) dans le moule de coulée (21,30), la position spatiale du point de coulée (33) étant choisie telle que la distance parcourue par la matière synthétique dans le moule de coulée (21,30) soit minimale.

3. Procédé selon l'une des revendications 1 ou 2, dans lequel chaque point de coulée (33) est disposé de manière qu'un élément d'étanchéité façonné, en particulier conformé en anneau, soit produit dans la direction d'écoulement, s'étendant en direction radiale, de la matière synthétique dans le moule de coulée (21,30).

4. Procédé selon l'une des revendications précédentes, où, pour fabriquer un élément d'étanchéité (1,2) sensiblement en forme d'anneau, la matière synthétique est introduite dans le moule de coulée (30) en un point de coulée (33) disposé à peu près au centre géométrique (M) de l'élément d'étanchéité (1,2) en forme d'anneau.

5. Procédé selon l'une des revendications précédentes, où, pour la fabrication d'un élément d'étanchéité (1,2) sensiblement en forme d'anneau
a) on fabrique, selon un procédé de moulage par injection, une ébauche de coulée (40) en forme de parachute, par le fait que l'on introduit et on laisse se solidifier, par un canal de coulée (31), la matière synthétique liquide au centre d'un espace creux (32), sensiblement en forme de disque, d'un moule de coulée (30),
b) l'ébauche de coulée (40) en forme de parachute est démoulée, et
c) une zone centrale (43) de l'ébauche de coulée (40) en forme de parachute est enlevée faisant qu'est produit un élément d'étanchéité sensiblement en forme d'anneau.

6. Procédé selon l'une des revendications précédentes, la matière synthétique comprenant au moins le PEEK (polyétheréthercétone) ou PFA (copolymère perfluoralkoxy) ou le PPS (sulfure de polyphénylène).

7. Procédé selon l'une des revendications précédentes, à la matière synthétique étant ajoutées en mélange des charges organiques, telles que du PTFE, ou des charges non organiques, telles que du graphite et/ou des matériaux en forme de fibre tel que des fibres de carbone, des fibres d'aramique, des fibres de verre ou du métal.

8. Procédé selon la revendication 7, à la matière synthétique étant ajoutées en mélange les substances (1v) en forme de fibres, en des concentrations différentes, de manière que la masse volumique des matériaux en forme de fibres puisse varier localement dans l'élément d'étanchéité (1,2).

9. Procédé selon l'une des revendications précédentes, où le retrait du matériau, qui se produit pendant le refroidissement de l'élément d'étanchéité (1,2), est contrôlé de manière qu'au moins deux faces (1h, 1m) de l'élément d'étanchéité (1,2) soient configurées de façon à présenter une précision dimensionnelle.

10. Procédé selon l'une des revendications précédentes, **caractérisé en ce que** l'élément d'étanchéité (1,2) est fabriqué à l'aide d'au moins une matière synthétique colorée dans la masse.

11. Elément d'étanchéité, en particulier pour une bague d'étanchéité ou un segment de piston dans un compresseur à piston fonctionnant à sec, fabriqué suivant un procédé selon l'une des revendications 1 à 10 qui est réalisé sous forme de corps annulaire ouvert ou fermé, comme système à segment unique ou comme bague segmentée.

12. Elément d'étanchéité selon la revendication 11, réalisé sous la forme de bague d'étanchéité avec un point de jointoiement à chevauchement.

13. Elément d'étanchéité selon l'une des revendications 11 à 12, avec une configuration annulaire et comportant des substances en forme de fibres s'étendant dans la direction périphérique.
